# EUROPÄISCHE PATENTSCHRIFT

(11) **EP 4 077 980 B1**
(45) Veröffentlichungstag und Bekanntmachung des Hinweises auf die Patenterteilung: **16.10.2024**
(21) Anmeldenummer: 20820398.4
(22) Anmeldetag: 04.12.2020
(51) Int. Cl.: F16H 63/18, F16H 63/28, F16H 63/32, F16H 61/32, F16H 63/34

(54) **SCHALTWALZENANORDNUNG FÜR EINE SCHALTVORRICHTUNG EINER GETRIEBEEINHEIT UND SCHALTVERFAHREN**
GEAR SHIFT DRUM ASSEMBLY FOR A SHIFT DEVICE OF A TRANSMISSION UNIT AND SHIFTING METHOD
ENSEMBLE TAMBOUR DE CHANGEMENT DE VITESSE POUR UN DISPOSITIF DE CHANGEMENT DE VITESSE D'UNE UNITÉ DE TRANSMISSION ET PROCÉDÉ DE CHANGEMENT DE VITESSE

(30) Priorität: 19.12.2019 DE 102019220179
(43) Veröffentlichungstag der Anmeldung: 26.10.2022
(73) Patentinhaber: Magna PT B.V. & Co. KG, 74199 Untergruppenbach (DE)
(72) Erfinder: KRISTOFCSAK, Andras, 51375 Leverkusen (DE); KÖNIG, Axel, 50733 Köln (DE)
(74) Vertreter: Reuter, Silke Beatrix
(86) Internationale Anmeldenummer: PCT/EP2020/084764
(87) Internationale Veröffentlichungsnummer: WO 2021/122073

(56) Entgegenhaltungen:
- DE-A1- 102018 101 098
- DE-A1- 19 941 568
- DE-B4- 19 655 083
- JP-A- S6 392 859

## Beschreibung

Die vorliegende Erfindung betrifft eine Schaltwalzenanordnung für eine Schaltvorrichtung einer Getriebeeinheit, insbesondere für Kraftfahrzeuge, mit einem Schaltwalzenkörper, der um eine Schaltwalzenachse drehbar ist, wobei an dem Schaltwalzenkörper eine erste und mindestens eine zweite Schaltkontur ausgebildet ist, die sich über 360 Grad des Umfangsabschnitt des Schaltwalzenkörpers erstrecken, wobei die erste und zweite Schaltkontur in einer axialen und/oder radialen Richtung ausgebildet sind, wobei zumindest die erste Schaltkontur einen optionalen Pfad aufweist, wobei in die erste Schaltkontur ein erstes Schaltelement eingreift und in die zweite Schaltkontur ein zweites Schaltelement derart eingreifen, dass diese durch Drehen des Schaltwalzenkörpers mittels der korrespondierenden Schaltkontur in axialer Richtung des Schaltwalzenkörpers verschiebbar sind.

Weiterhin betrifft die vorliegende Erfindung eine Getriebeeinheit für ein Kraftfahrzeug, mit einer Schaltvorrichtung zum Schalten von Gangstufen, wobei die Schaltvorrichtung eine Schaltwalzenanordnung aufweist.

Des Weiteren betrifft die vorliegende Erfindung ein Verfahren zum Durchführen einer Schaltung in eine optionale neutrale Stellung.

Schaltvorrichtungen für Getriebe sind beispielsweise aus der DE 196 55 083 B4 und der WO 97/ 02 963 A2, sowie der DE 10 2018 220 869 A1 und DE 10 2007 040 040 A1 bekannt.

Kraftfahrzeuggetriebe, die mittels Schaltwalzen geschaltet werden, sind insbesondere automatisierte Getriebe in Vorgelegebauweise, also insbesondere automatisierte Schaltgetriebe mit einer einzelnen Trennkupplung zwischen einem Antriebsmotor und dem Getriebe, sowie sogenannte Doppelkupplungsgetriebe, die zwei parallele Leistungsübertragungsstränge aufweisen. Jeder der Leistungsübertragungsstränge beinhaltet dabei eine Trennkupplung und ein Teilgetriebe. Das eine Teilgetriebe ist den geraden Gangstufen zugeordnet, das andere Teilgetriebe den ungeraden Gangstufen. Durch überschneidende Betätigung der zwei Trennkupplungen können Gangwechsel zugkraftunterbrechungsfrei durchgeführt werden
Bei Schaltvorrichtungen, die zum Betätigen von Schaltelementen eine drehbar gelagerten Schaltwalzenkörper mit Schaltkonturen aufweisen, ist es erforderlich die Drehposition zu erfassen. Zwecks Referenzierung der Drehposition kann ein rotatorischer Endanschlag in die Schaltwalzen integriert werden. Bei derartigen bekannten Schaltwalzenanordnungen, die einen fest mit dem Schaltwalzenkörper verbundenen Anschlag aufweisen, ergibt sich die maximale Verdrehbarkeit des Schaltwalzenkörpers durch 360° abzüglich des Umfangswinkels des Anschlagelementes und abzüglich eines Umfangswinkels des Referenzelementes, das beispielsweise ein gehäusefestes Element, wie ein Gehäuseanschlag sein kann. Hierbei ist jedoch die Verdrehbarkeit der Schaltwalzen begrenzt. Breite und massive Anschläge reduzieren den zur Verfügung stehenden Verdrehwinkel der Schaltwalze zum Teil signifikant.

Insbesondere durch die Hybridisierung von Getrieben entstehen neue Herausforderungen an die Schaltvorrichtungen. Unter Umständen ist eine über 360 Grad hinausgehende Verdrehung erforderlich.

Bei einem Getriebelayout, bei dem im Normalbetrieb immer eine Gangstufe eingelegt ist, damit ein zugkraftunterbrechungsfreies hoch und runterschalten möglich ist, besteht das Problem der Realisierung einer potentiell benötigten neutralen Gangposition. Eine neutrale Gangposition ist bei einem Hybridfahrzeug insbesondere für die Funktion des Standladens in der Parkposition des Kraftfahrzeugs erforderlich.

Die Realisierung einer potentiell benötigten neutralen Gangposition ist dabei insbesondere problematisch bei einer Schaltwalzenanordnung die eine über 360 Grad hinausgehende Verdrehung aufweist, weil hierdurch eine kurzzeitige unerwünschte Zugkraftunterbrechung entstehen würde.

Es ist vor diesem Hintergrund eine Aufgabe der Erfindung, eine Schaltwalzenanordnung sowie eine Getriebeeinheit zu schaffen, bei denen die Probleme aus dem Stand der Technik wenigstens teilweise verringert werden und vorzugsweise eine Schaltwalzenanordnung zu schaffen, die in beide Verdrehrichtungen endlos verdreht werden kann und die eine schaltbaren neutralen Stellung ermöglicht.

Die obige Aufgabe wird gelöst durch eine Schaltwalzenanordnung nach Anspruch 1 und zwar durch eine Schaltwalzenanordnung für eine Schaltvorrichtung einer Getriebeeinheit, insbesondere für Kraftfahrzeuge, mit einem Schaltwalzenkörper, der um eine Schaltwalzenachse drehbar ist, wobei an dem Schaltwalzenkörper eine erste und mindestens eine zweite Schaltkontur ausgebildet ist, die sich über 360 Grad des Umfangsabschnitt des Schaltwalzenkörpers erstrecken, wobei die erste und zweite Schaltkontur in einer axialen und/oder radialen Richtung ausgebildet sind, wobei zumindest die erste Schaltkontur einen optionalen Pfad mit einer Form einer axial lokal verbreiteten ersten Schaltkontur in dem Schaltwalzenkörper aufweist, wobei in die erste Schaltkontur ein erstes Schaltelement eingreift und in die zweite Schaltkontur ein zweites Schaltelement derart eingreifen, dass diese durch Drehen des Schaltwalzenkörpers mittels der korrespondierenden Schaltkontur in axialer Richtung des Schaltwalzenkörpers verschoben werden. Das erste und das zweite Schaltelement sind über eine schaltbare Koppelvorrichtung derart koppelbar, dass diese die axiale Bewegung des zweiten Schaltelements auf das erste Schaltelement zwecks Schaltens in eine neutrale Gangposition, die dem optionalen Pfad zugeordnet ist, übertragen kann.

Des Weiteren verbleibt das erste Schaltelement in der neutralen Gangposition wenn das zweite Schaltelement in eine neutrale Gangposition geschaltet wird. Dies wird durch die Ausbildung und Anordnung des optionalen Pfads erreicht, der einen Winkelbereich überdeckt, in dem das erste Schaltelement zwischen einer Gangstufe und einer Neutralstellung im optionalen Pfad schaltbar und das zweite Schaltelement zwischen einer Gangstufe und einer Neutralstellung schaltbar ist.

Durch die oben genannte Ausgestaltung der Schaltwalzenanordnung kann auf einfache Art und Weise eine schaltbare neutrale Stellung realisiert werden.

Des Weiteren ist eine endlose Verdrehung des Schaltwalzenkörpers und somit ein Gesamtschaltwinkel von 360 Grad erreichbar.

Besondere Ausführungsarten der Erfindung werden in den abhängigen Ansprüchen wiedergegeben.

Die Schaltwalzenanordnung ist derart ausgeführt, dass das erste und zweite Schaltelement in zwei Schaltrichtungen verstellbar und benachbart zueinander auf einer Schaltstange geführt sind. Bei der Verdrehung des Schaltwalzenkörpers um seine Achse gibt es dabei aufgrund einer entsprechenden Ausführung der korrespondierenden Schaltwalzennuten eine Stellung, in der die Schaltelemente am nächsten zueinander bewegt werden. Diese Stellung und die Bewegung wird genutzt um eine optionale Interaktion zwischen den beiden Schaltelementen über die Koppelvorrichtung zu erreichen. Eine axiale Verlagerung des zweiten Schaltelements führt dabei zu einer gleichzeitigen gekoppelten axialen Verlagerung des ersten Schaltelementes, wobei dieses in den optionalen Pfad verschoben wird. Dieser optionale Pfad entspricht einer Neutralstellung und kann im Normalbetrieb beim Schalten der Gangstufen nicht erreicht werden.

Vorzugsweise umfasst die schaltbare Koppelvorrichtung eine formschlüssige Kupplung, sowie eine schaltbare Betätigungsvorrichtung.

Die schaltbare Betätigungsvorrichtung umfasst vorzugsweise ein Anschlagelement, welches zwecks Referenzierens eines Verdrehwinkels mit einem Referenzelement zusammenwirkt und über einen Aktuator betätigbar ist.

Weiter vorteilhaft ist diese formschlüssige Kupplung als Klauenkupplung ausgeführt, die in eine Neutralposition (inaktiv) - geschaltet (Zahn in Lücke Stellung), Neutralposition (inaktiv) - geöffnet (Zahn auf Lücke Stellung) und Koppelposition (Interaktion) (Zahn auf Zahn Stellung) schaltbar ist. In der Koppelposition kann eine Axialverschiebung des zweiten Schaltelements direkt auf das erste Schaltelement übertragen werden, wodurch dieses in den optionalen Pfad verlagert werden kann.

Weiter vorteilhaft ist das Referenzelement als radial sich erstreckender Stift ausgeführt ist, der in einem der Referenzwinkelposition zugeordneten Referenzwinkel am Umfang der Außenfläche des Schaltwalzenkörpers angeordnet ist.

Eine Weiterbildung sieht vor, dass das Anschlagelement ein Hebel ist, der um eine Achse, die parallel zu der Drehachse verläuft zwischen einer "Neutralposition", in der das Anschlagelement nicht mit dem Referenzelement in Eingriff bringbar ist, und einer "Aktivierungsposition" in der das Anschlagelement, vorzugsweise der Endbereich in Eingriff mit dem Referenzelement bringbar ist, verschwenkbar gelagert ist.

In der Neutralposition kann die Schaltwalze endlos verdreht werden, das Anschlagelement befindet sich in einer verschwenkten Stellung, in der das Anschlagelement nicht mit dem Referenzelement in Eingriff bringbar ist.

Unter einem weiteren Aspekt der vorliegenden Erfindung wird auf einfache Art und Weise ein Verfahren nach Anspruch 8 zum Durchführen eines Schaltvorgangs in eine optionale neutrale Stellung mit einer Schaltwalzenanordnung definiert.

Ferner wird die obige Aufgabe gelöst durch eine Getriebeeinheit für ein Kraftfahrzeug nach Anspruch 7, mit einer Schaltvorrichtung zum Schalten von Gangstufen, wobei die Schaltvorrichtung eine Schaltwalzenanordnung der erfindungsgemäßen Art aufweist.

Ausführungsbeispiele der Erfindung sind in der Zeichnung dargestellt und werden in der nachfolgenden Beschreibung näher erläutert. Es zeigen:
- Fig. 1a: eine schematische Darstellung eines Antriebsstranges eines Kraftfahrzeuges mit einer Getriebeeinheit und einer Schaltwalzenanordnung,
- Fig. 1b: eine schematische Darstellung eines Querschnitts einer Schaltwalzenanordnung mit Referenzelement,
- Fig. 2: eine perspektivische erste Ansicht auf eine erfindungsgemäße Schaltwalzenanordnung,
- Fig. 3: eine Seitenansicht auf die Schaltwalzenanordnung,
- Fig. 4: einen Ausschnitt auf eine Ansicht auf die Schaltelemente und Koppelvorrichtung,
- Fig. 4a: eine schematische Darstellung der Position der Koppelvorrichtung vor und nach dem Schaltvorgang,
- Fig. 5: eine schematische Darstellung der Abwicklung der Schaltwalze der erfindungsgemäßen Schaltwalzenanordnung,
- Fig. 5a: einen Detailausschnitt der Abwicklung gemäß des Details D der Figur 5,
- Fig. 6: ein Ausschnitt der Abwicklung der Schaltwalze in einem Umfangsbereich zwischen 0 Grad und 150 Grad,
- Fig. 6a: eine vergrößerte Darstellung eines Details im Bereich der Schaltkontur mit optionalem Pfad,
- Fig. 7: einen Ausschnitt auf eine Ansicht auf die Schaltelemente und Koppelvorrichtung,
- Fig. 7a: eine schematische Darstellung von Positionen der Koppelvorrichtung während eines ersten Schaltvorgangs,
- Fig. 7b: einen Ausschnitt auf die Abwicklung der Schaltwalze im Bereich der Schaltkonturen mit einer Darstellung der Nutensteine und deren Verstellbewegung während des ersten Schaltvorgangs,
- Fig. 8: ein Ausschnitt der Abwicklung der Schaltwalze in einem Umfangsbereich zwischen 0 Grad und 150 Grad, mit einer Darstellung der Nutensteine und deren Verstellbewegung während des Zurückdrehens des Schaltwalzenkörpers von 120 Grad auf 90 Grad,
- Fig. 8a: eine vergrößerte Darstellung eines Details im Bereich der Schaltkontur mit optionalem Pfad,
- Fig. 9: einen Ausschnitt auf eine Ansicht auf die Schaltelemente und Koppelvorrichtung,
- Fig. 9a: eine schematische Darstellung von Positionen der Koppelvorrichtung während eines zweiten Schaltvorgangs
- Fig. 9b: einen Ausschnitt auf die Abwicklung der Schaltwalze im Bereich der Schaltkonturen mit einer Darstellung der Nutensteine und deren Verstellbewegung während des zweiten Schaltvorgangs
- Fig. 10: ein Ausschnitt der Abwicklung der Schaltwalze in einem Umfangsbereich zwischen 0 Grad und 150 Grad, mit einer Darstellung der Nutensteine und deren Verstellbewegung während des Schaltvorgangs des Schaltens in die Gangstufe 4 bei eingelegter 2. Gangstufe ohne Betätigung der Koppelvorrichtung und ohne axiale Verlagerung des ersten Schaltelements in den optionalen Pfad,
- Fig.10a: eine vergrößerte Darstellung eines Details im Bereich der Schaltkontur mit optionalem Pfad,
- Fig. 11: einen Ausschnitt auf eine Ansicht auf die Schaltelemente und Koppelvorrichtung,
- Fig. 11a: eine schematische Darstellung von Positionen der Koppelvorrichtung während eines dritten Schaltvorgangs; und
- Fig. 11b: einen Ausschnitt auf die Abwicklung der Schaltwalze im Bereich der Schaltkonturen mit einer Darstellung der Nutensteine und deren Verstellbewegung während des dritten Schaltvorgangs.

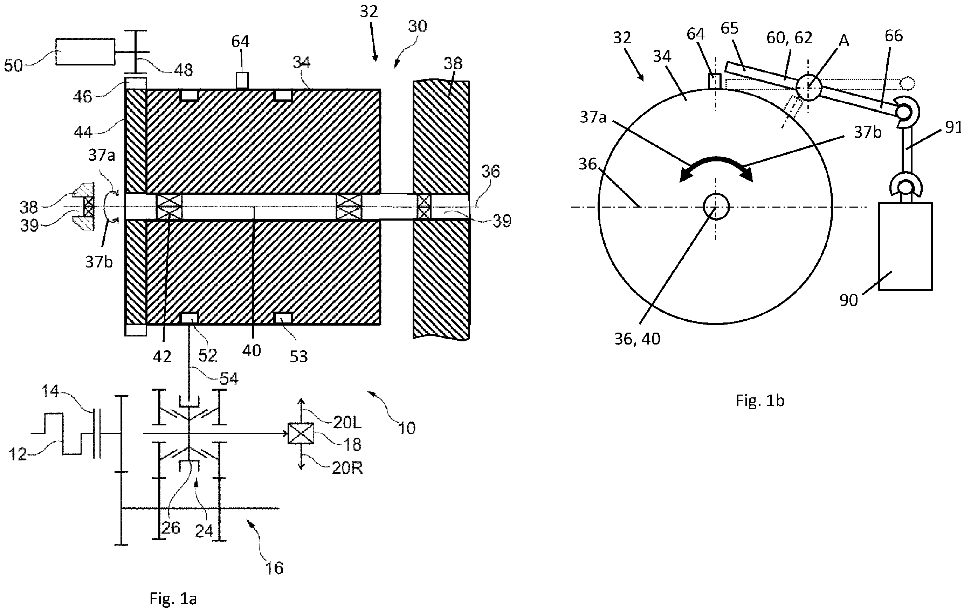

In Fig. 1a ist ein Antriebsstrang 10 für ein Kraftfahrzeug schematisch dargestellt. Der Antriebsstrang 10 weist einen Antriebsmotor 12 auf, der durch einen Verbrennungsmotor oder durch eine Hybrid-Antriebseinheit gebildet sein kann. Ferner beinhaltet der Antriebsstrang 10 eine Kupplungsanordnung 14, die als Einfachkupplung oder auch als Doppelkupplung realisiert sein kann. Eingangsseitig ist die Kupplungsanordnung 14 mit dem Antriebsmotor 12 verbunden. Ausgangsseitig ist die Kupplungsanordnung 14 mit einer Getriebeeinheit 16 zum Einrichten einer Mehrzahl von Gangstufen verbunden, wobei die Getriebeeinheit 16 schematisch als Stufengetriebe in Vorgelegebauweise dargestellt ist. Ein Ausgang der Getriebeeinheit 16 ist mit einem Differenzial 18 verbunden, mittels dessen Antriebsleistung auf angetriebene Räder 20L, 20R verteilbar ist.

Die Getriebeeinheit 16 weist zum Einrichten der unterschiedlichen Gangstufen eine Mehrzahl von Schaltkupplungen auf, von denen eine Schaltkupplungsanordnung in Form eines Schaltkupplungspaketes in Fig. 1a schematisch bei 24 dargestellt ist. Die Schaltkupplungsanordnung 24 dient alternativ dazu, einen ersten oder einen zweiten Radsatz (in Fig. 1a nicht näher bezeichnet) in den Leistungsfluss zu bringen (hierbei wird ein Losrad eines Radsatzes mit einer zugeordneten Welle verbunden). Die Schaltkupplungsanordnung 24 wird mittels einer Schaltmuffe 26 geschaltet, derart, dass entweder der eine Radsatz oder der andere Radsatz in den Leistungsfluss versetzbar ist, oder eine Neutralstellung der Schaltwalzenanordnung einrichtbar ist.

Zum axialen Bewegen und folglich Schalten der Schaltmuffe 26 und gegebenenfalls weiterer Schaltmuffen von weiteren Schaltkupplungsanordnungen der Getriebeeinheit 16 beinhaltet die Getriebeeinheit 16 eine Schaltvorrichtung 30. Die Schaltvorrichtung 30 ist als Schaltaktuatorik realisiert, derart, dass Gangstufen der Getriebeeinheit 16 automatisiert gewechselt werde können. Die Schaltvorrichtung 30 beinhaltet eine Schaltwalzenanordnung 32. Die Schaltwalzenanordnung 32 weist einen Schaltwalzenkörper 34 auf, der in zwei Drehrichtungen 37a, 37b um eine Drehachse 36 verdrehbar gelagert ist, und zwar verdrehbar in Bezug auf ein Gehäuse 38. Das Gehäuse 38 kann beispielsweise ein Gehäuse der Getriebeeinheit 16 sein.

An dem Gehäuse 38 können ein oder mehrere Schaltwalzenachsenaufnahmen 39 ausgebildet sein, in denen eine Schaltwalzenachse 40 aufgenommen ist.

Der Schaltwalzenkörper 34 ist mit einem Antriebsglied 44 verbunden, und zwar an einer axialen Stirnseite hiervon. Das Antriebsglied 44 kann beispielsweise durch ein Zahnrad gebildet sein, das eine Außenverzahnung 46 aufweist. Die Außenverzahnung 46 des Antriebsgliedes 44 kann beispielsweise mit einem Antriebsritzel 48 eines Schaltwalzenmotors 50 in Eingriff stehen. Der Schaltwalzenmotor 50 kann beispielsweise ein elektrischer Motor sein. Durch Ansteuern des Schaltwalzenmotors 50 kann der Schaltwalzenkörper 34 folglich in Rotation in Bezug auf das Gehäuse 38 versetzt werden.

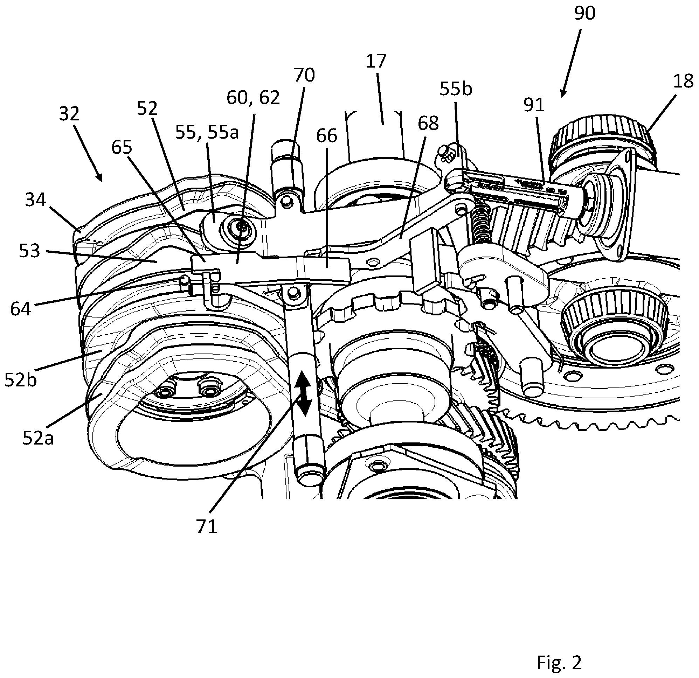

An dem Außenumfang des Schaltwalzenkörpers 34 sind eine erste Schaltkontur 52a sowie eine zweite Schaltkontur 52b in Form von Schaltwalzennuten ausgebildet. Die Schaltkonturen 52a, 52b sind wie man es aus der Figur 2 erkennen kann axial konturiert sind und erstrecken sich über 360 Grad der Umfangsfläche des Schaltwalzenkörpers 34.

In die erste Schaltkontur 52a greift ein erstes Schaltelement 51a ein, welches zudem an einer zugeordneten Schaltmuffe 26 angreift. Das Schaltelement 51a weist dabei einen Nutenstein auf, der in die korrespondierende Schaltwalzennut eingreift. Ein Verdrehen des Schaltwalzenkörpers 34 führt bei geeigneter Ausführung der ersten Schaltkontur 52a folglich zu einem axialen Versatz des Schaltelements 51a und folglich zu einem axialen Versatz der Schaltmuffe 26, was mit dem Ein- oder Auslegen einer Gangstufe einhergeht. Dem Schaltelement 51a sind in dem nachfolgend beschriebenen Ausführungsbeispiel die Gangstufen 2 und 3 zugeordnet.

In die zweite Schaltkontur 52b greift ein zweites Schaltelement 51b ein. Ein Verdrehen des Schaltwalzenkörpers 34 führt bei geeigneter Ausführung der zweiten Schaltkontur 52b zu einem axialen Versatz des Schaltelements 51b und folglich zu einem axialen Versatz einer zugeordneten Schaltmuffe (nicht dargestellt in der Figur 1a), was mit einem Ein- oder Auslegen einer Gangstufe einhergeht. Dem Schaltelement 51b sind in dem nachfolgend beschriebenen Ausführungsbeispiel die Gangstufen 1 und 4 zugeordnet.

Des Weiteren umfasst der Schaltwalzenkörper 34 ein Referenzelement 64, welches in dem gezeigten Ausführungsbeispiel als Zapfen/Pin ausgeführt ist. Das Referenzelement 64 definiert eine radiale Position des Schaltwalzenkörpers 34 und dient somit zur Festlegung einer Referenzwinkelposition. Zur Identifizierung dieser Referenzwinkelposition kann das Referenzelement 64 mit einem Anschlagelement 62 einer Anschlageinrichtung 60 zusammenwirken.

Die Anschlageinrichtung 60 ist schematisch in der Figur 1b dargestellt.

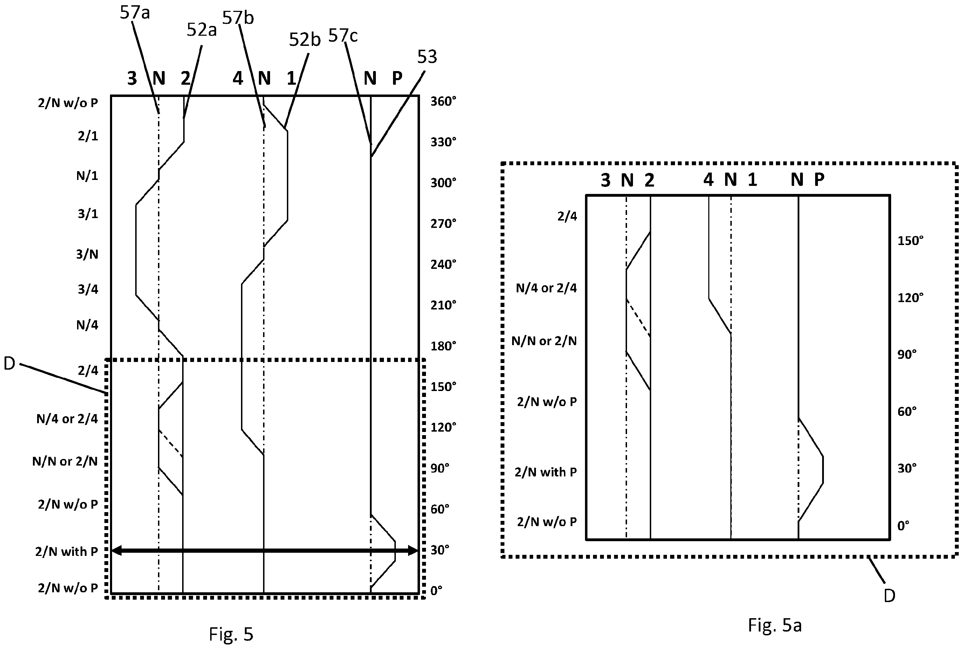

Das erste und das zweite Schaltelement 51a, 51b sind über eine schaltbare Koppelvorrichtung 200 koppelbar. Die schaltbare Koppelvorrichtung 200 ist an dem als Hebel ausgeführten Anschlagelement 62 gekoppelt. Das Anschlagelement 62 ist um eine Achse A verschwenkbar gelagert. Diese Achse A verläuft parallel zu der Schaltwalzenachse 40. Das Anschlagelement 62 kann zwischen einer "Neutralposition", in der das Anschlagelement 62 nicht mit dem Referenzelement 64 in Eingriff bringbar ist, und einer "Aktivierungsposition" in der das Anschlagelement 62, vorzugsweise der Endbereich in Eingriff mit dem Referenzelement 64 bringbar ist, verschwenkt werden. Wie es in der Figur 5 zu erkennen ist, ist das Anschlagelement 62 mit dem Referenzelement 64 in der Referenzwinkelposition in Eingriff.

Bei einer Aktivierung des Anschlagelementes 62 wird der Schaltwalzenkörper 34 zwecks Referenzierung solange weitergedreht, bis das Anschlagelement 62 an das Referenzelement 64 anschlägt und das Verdrehen des Schaltwalzenkörpers (34) blockiert wird. Diese blockierte Position entspricht der Referenzwinkelposition in der eine Referenzierung des Schaltwinkels erfolgt.

Die in der Figur 1b dargestellte, nach oben verschwenkte Stellung des Anschlagelements 62 zeigt die Neutralposition.

Eine Betätigung des Anschlagelements 62 erfolgt über einen Aktuator 90. Dieser überträgt über ein Koppelelement 91 seine Linearbewegung unmittelbar oder mittelbar über weitere Kinematikelemente auf das drehbar gelagerte Anschlagelement 62, welches infolgedessen eine Drehbewegung ausführt. In der schematisch dargestellten Abbildung der Figur 1b ist das Koppelelement 91 unmittelbar an dem Anschlagelement 62 angebunden. Die nachfolgende Beschreibung des dargestellten Ausführungsbeispiels der Figuren 2 bis 5 zeigt eine Übersetzung der Verstellbewegung des Koppelelements 91 über einen weiteren Hebel 68 auf das Anschlagelement 62.

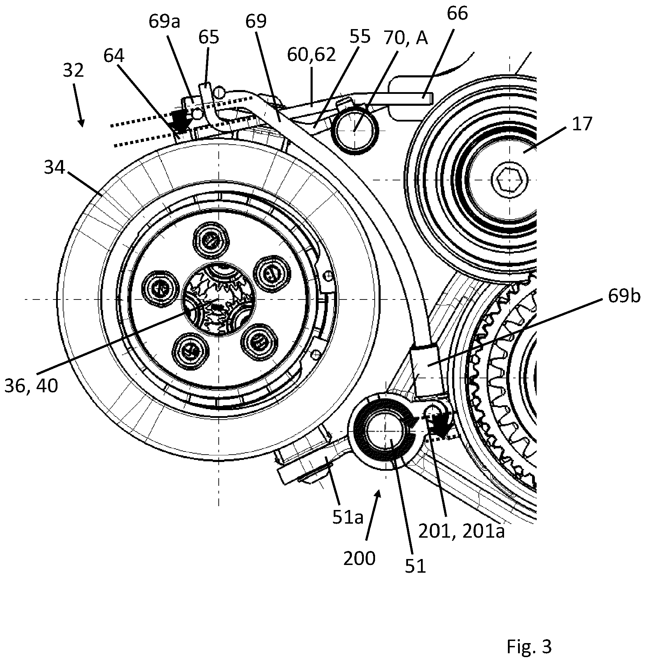

Die Figuren 2 und 3 zeigen die erfindungsgemäße Schaltwalzenanordung in einer Ausführungsform, die eine schaltbare Koppelvorrichtung 200 umfasst. Wie nachfolgend erläutert, sind die Schaltelemente 51a, 51b mittels der schaltbaren Koppelvorrichtung koppelbar (Koppelposition) und entkoppelbar (entkoppelte Position).

Die Schaltelemente 51a, 51b sind parallel zueinander beabstandet auf einer Schaltstange 51 angeordnet. Diese ist parallel beabstandet zu der Drehachse 36 angeordnet.

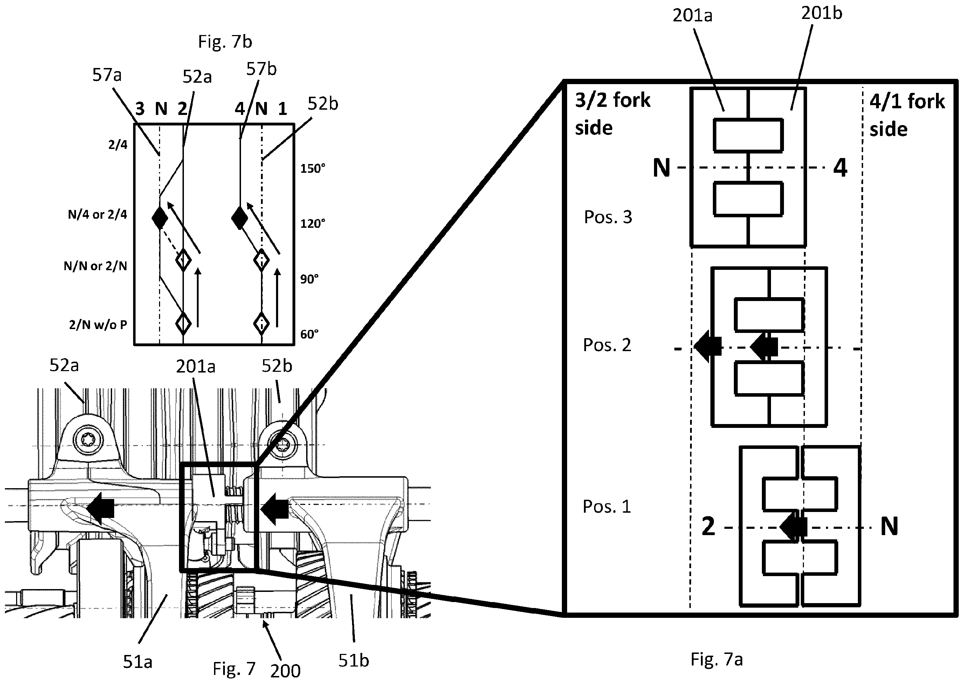

Die Schaltelemente 51a, 51b sind aus der Darstellung der Figur 7 zu ersehen. Die Darstellung der Figur 7 zeigt einen Ausschnitt der Schaltwalzenanordnung von unten. In der Seitenansicht der Figur 3 ist das erste Schaltelement 51a von der Seite zu erkennen.

Erstes und zweites Schaltelement 51a, 51b sind über eine Kupplung 201 der schaltbaren Koppelvorrichtung 200 koppelbar. Die Kupplung 201 ist als Klauenkupplung ausgeführt und weist ein erstes Kupplungsteil 201a, welches dem ersten Schaltelement 51a zugeordnet ist und ein zweites Kupplungsteil 201b, welches dem zweiten Schaltelement 51b zugeordnet ist auf. Die Kupplungsteile sind dabei an dem zugeordneten Schaltelement derart angebunden, dass eine axiale Verschiebung des Kupplungsteils auf das zugeordnete Schaltelement übertragen wird. Das erste Kupplungsteil 201a weist axial sich erstreckende Zähne 202a auf. Das zweite Kupplungsteil 201b weist ebenfalls Zähne 202b auf. Die Vorsprünge/Zähne des ersten und zweiten Schaltelements 51a, 51b sind derart ausgeführt und angeordnet, dass sich durch eine Relativdrehung bzw. zusätzliche Axialverlagerung des ersten zu dem zweiten Schaltelements 51a/51b folgende Positionen schalten lassen.

### Neutralposition (inaktiv) - geschaltet (Zahn in Lücke Stellung):

In dieser Position der beiden Kupplungsteile 201a/201b greifen die Zähne 202a des ersten Kupplungsteils 201a in Ausnehmungen 203b, die zwischen den Zähne 202b des zweiten Kupplungsteils ausgebildet sind formschlüssig ein. Gleichzeitig greifen die Zähne 202b des zweiten Kupplungsteils 201b in Ausnehmungen 203a, die zwischen den Zähne 202a des ersten Kupplungsteils ausgebildet sind formschlüssig ein.

### Neutralposition (inaktiv) - geöffnet (Zahn auf Lücke Stellung):

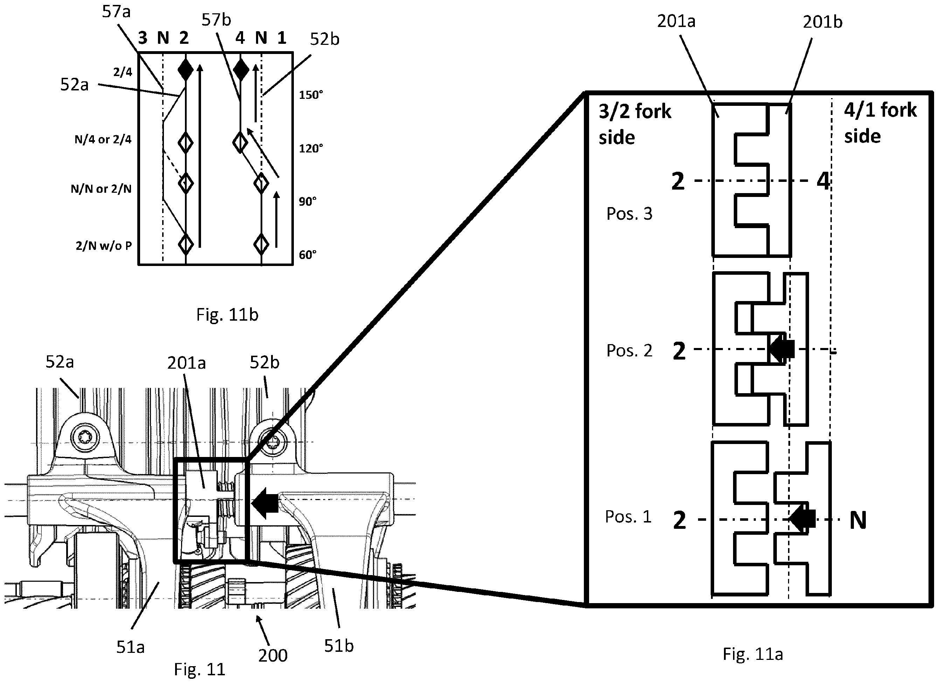

Diese Position entspricht der geschalteten Neutralposition (inaktiv), wobei die formschlüssige Verbindung durch eine axiale Verlagerung der Kupplungsteile 201a, 201b aufgehoben ist, und die Zähne 202a, 202b nicht in die Ausnehmungen 203a, 203b eingreifen. Diese Position ist in der Figur 11a in der 1. Position (Abbildung ganz unten) dargestellt.

### Koppelposition (Interaktion) (Zahn auf Zahn Stellung):

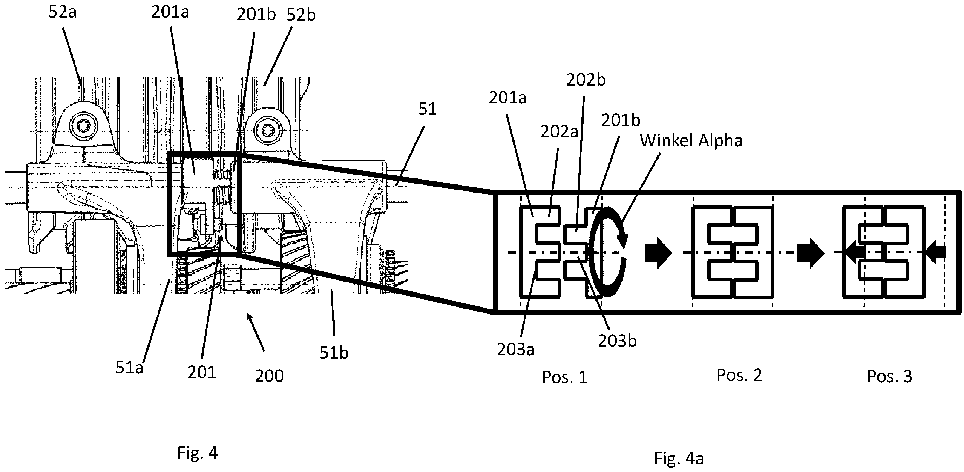

Bei einer Verdrehung des ersten Kupplungsteils 201a um einen Winkel Alpha in Bezug auf das zweite Kupplungsteil 201b liegen die Zähne 202a des ersten Kupplungsteils 201a mittels ihrer Stirnseiten an den Stirnseiten der Zähnen 202b des zweiten Kupplungsteils 201b an. Folglich verkleinert sich der Abstand der Schaltelemente 51a, 51b in axialer Richtung zueinander. Dies ist in den Positionen 1 und 2 der Figur 4a schematisch dargestellt. Die Abbildung ganz links (Position 1) zeigt die Neutralposition geöffnet), die mittlere Abbildung zeigt die Koppelposition.

Bei der dargestellten Ausführungsform wird das Anschlagelement 62 für die Betätigung der schaltbaren Koppelvorrichtung 200 mit verwendet.

Das Anschlagelement 62, ist wie bereits obenstehend erläutert zwischen der "Neutralposition" und der "Aktivierungsposition" um eine Achse A drehbar gelagert. In der Figur 5 ist das Anschlagelement 62 in der "Aktivierungsposition" gezeigt. Die obere gestrichelte Linie zeigt die "Neutralposition" des Anschlagelements 62. Das Anschlagelement 62 ist als Hebel mit einem ersten Endbereich 65 und einem zweiten Endbereich 66 ausgebildet. In dieser Aktivierungsposition ist der erste Endbereich 65 in einer entgegen dem Uhrzeigersinn in Richtung auf den Schaltwalzenkörper 34 verschwenkten Position. Der erste Endbereich 65 kann in der entsprechenden "Aktivierungsposition" mit dem Referenzelement 64 in der Referenzwinkelposition als Anschlag in Eingriff gebracht werden.

In der "Neutralposition" befindet sich das Anschlagelement 62 im Uhrzeigersinn verdreht um die Lagerachse A (schematisch dargestellt in Fig. 1b) so dass der erste Endbereich 65 maximal nach oben geschwenkt ist und kein Eingriff mit dem Referenzelement 64 erfolgen kann.

Aus den Figuren 2 und 3 kann man ersehen, dass an dem vorderen Endbereich 65 des Anschlagelements 62 eine Koppelstange 69 mittels eines ersten Endbereichs 69a angebunden ist. Die Koppelstange 69 verläuft um den Schaltwalzenkörper 34 nach unten und ist mittels ihres zweiten Endbereichs 69b an dem ersten Kupplungsteil 201a angebunden. Aufgrund dieser Kopplung zwischen Anschlagelement 62 und erstem Kupplungsteil 201a, wird eine Verlagerung des Anschlagelementes 62 von der Neutralposition in die Aktivierungsposition und vice versa direkt auf das erste Kupplungsteil 201a übertragen, wobei dieses um einen Winkel Alpha im Uhrzeigersinn (Verlagerung in Aktivierungsposition / Ansicht Figur 3) relativ zu dem zweiten Kupplungsteil 201b verdreht wird. Bei einer Verlagerung des Anschlagelements 62 in die Neutralposition erfolgt dementsprechend eine Verdrehung des ersten Kupplungsteils 201a zurück um den Winkel Alpha. In der Neutralposition des Anschlagelementes befindet sich dabei die schaltbare Kupplung in der geöffneten Neutralposition. In der Aktivierungsposition wird die schaltbare Kupplung in die Koppelposition/Interaktionsposition verbracht.

In einer nicht dargestellten Ausführungsform kann in einer alternativen Ausführungsform die Betätigung der schaltbaren Koppelvorrichtung 200 über ein separates Schaltelement erfolgen, welches eine oben beschriebene Verstellung in die Koppelposition und Neutralposition bei Bedarf schaltet.

Die Darstellung der Figur 5 zeigt eine schematische Darstellung einer Abwicklung des Schaltwalzenkörpers 34 im Bereich der ersten und zweiten Schaltkontur/Schaltwalzennut 52a, 52b sowie einer weiteren Schaltwalzennut 53. Die Schaltwalzennuten/Schaltkonturen 52a, 52b, 53 erstrecken sich um den gesamten Umfangsabschnitt des Schaltwalzenkörpers (360 Grad), so dass der Schaltwalzenkörper endlos in einer ersten Drehrichtung 37a und einer zweiten Drehrichtung 37b verdreht werden kann.

In die erste Schaltkontur 52a greift das erste Schaltelement 51a mittels eines Nutensteins 58a ein, das vorliegend den Gangstufen 3 und 2 zugeordnet ist.

In die zweite Schaltkontur 52b greift das zweite Schaltelement 51b mittels eines Nutensteins 58b ein, das vorliegend den Gangstufen 4 und 1 zugeordnet ist.

In die weitere Schaltwalzennut 53 greift ein drittes Schaltelement 55 mittels eines Nutensteins 58c ein, das zwischen einer Neutrallinie N und einer Parkposition verstellbar ist. Die als weitere Schaltwalzennut 53 ausgeführte Schaltkontur umfasst hierfür einen Schaltabschnitt S1, der einem Referenzwinkel zugeordnet ist, der in dem Ausführungsbeispiel 30 Grad beträgt.

Die Schaltwalzennuten/Schaltkonturen 52a, 52b 53 weisen jeweils eine Neutrallinie 57a, 57b, 57c auf.

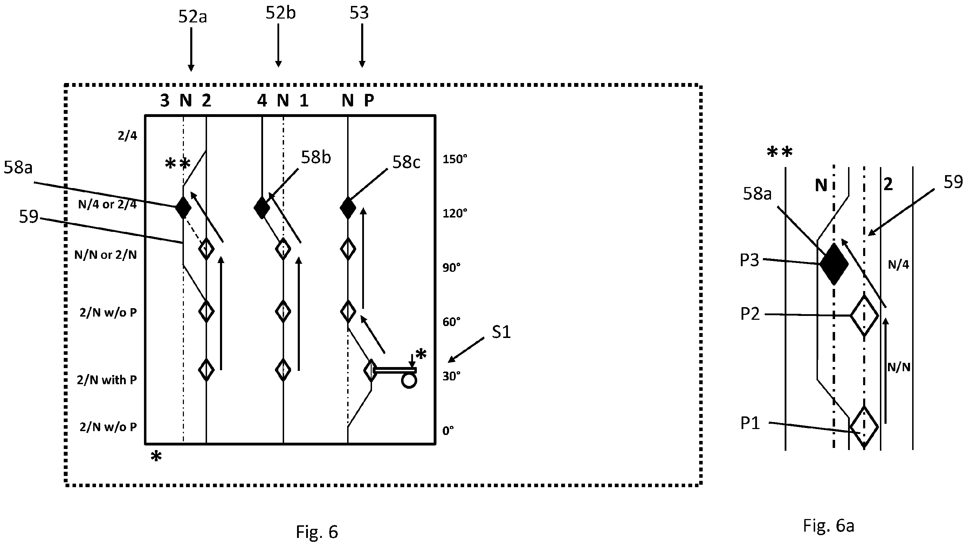

Die Schaltkontur 52a weist einen optionalen Pfad 59 auf, der in der Figur 6a in einem vergrößerten Ausschnitt gezeigt ist. Der optionale Pfad 59 ist als lokal axial verbreiterter Abschnitt der ersten Schaltkontur 52a ausgeführt und erstreckt sich über einen Winkelabschnitt / Umfangsbereich zwischen ca. 80 bis 130 Grad. Der Nutenstein 58a ist in dem vergrößerten Ausschnitt der Figur 6a in drei Positionen abgebildet. In der Position P1 und P2 des Schaltelementes ist die Gangstufe 2 eingelegt. Eine Verlagerung des Schaltelements 51a axial nach links in den optionalen Pfad, der einer Neutralstellung entspricht, ist in der Position P3 gezeigt. Diese Position des Schaltelements 51a wird beim Normalbetrieb der Getriebeeinheit und Einlegen/Auslegen der Gangstufen nicht erreicht, sondern wird erfindungsgemäß nur über die schaltbare Koppelvorrichtung 200 erzielt.

Nachfolgend wird anhand der weiteren Figuren 6, 6a, 8, 8a, 10, 10a das Schalten der Koppelvorrichtung zwecks Schaltens in eine Neutralposition näher erläutert.

Grundsätzlich zeigen die Pfeile in den Zeichnungen 6, 6a, 8, 8a, 10, 10a der Abwicklungen des Schaltwalzenkörpers 34 die Bewegungsrichtung der den Schaltelementen zugeordneten Nutensteine an, die bei einer entsprechenden Verdrehung des Schaltwalzenkörpers 34 in den zugeordneten Schaltwalzennuten gleitend eingreifen. Hierbei zeigen die nur konturiert eingezeichneten Nutensteine in Form einer Raute die "alte Postion" und die schwarz ausgefüllten Nutensteine die "neue Position" nach der Verdrehung des Schaltwalzenkörpers gemäß den Pfeilen in die eingezeichnete Drehwinkelposition an. Auf der rechten Seite der Abwicklung sind die zugeordneten Drehstellungen des Schaltwalzenkörpers angezeigt. Auf der rechten Seite der Darstellung sind zu den Drehstellungen die entsprechenden eingelegten Gangstufen angezeigt. Als Beispiel ist z.B. bei 60 Grad mittels des ersten Schaltelements 51a in der Schaltkontur 52a die Gangstufe 2 eingelegt. Das zweite Schaltelement 51b ist in der zweiten Schaltkontur 52b auf der Neutrallinie. Das dritte Schaltelement 55 ist in der weiteren Schaltwalzennut 53 in der Neutralposition auf der Neutrallinie.

In den gezeigten Figuren 6, 8, 10 kann man erkennen, dass es eine Schaltwalzenposition gibt (ca. 120-180 Grad), in der das erste und das zweite Schaltelement 51a, 51b hinsichtlich ihres axialen Abstandes zueinander am nächsten zueinander bewegt werden. Diese Schaltwalzenposition kann wie nachfolgend beschrieben genutzt werden, um eine optionale Interaktion zwischen den Schaltelementen 51a, 51b mittels der Koppelvorrichtung zu erzielen. Über die schaltbare Koppelvorrichtung 200 kann dementsprechend eine Axialverlagerung des zweiten Schaltelements 51b auf das erste Schaltelement 51a übertragen werden. Diese axiale Verlagerung ist in der Figur 6, 6a gezeigt und wird über das Schalten des Aktuators 90 und Verstellen des Anschlagelements 62 in die Aktivierungsposition erreicht.

Ausgangssituation beim Betätigen des Aktuators 90 und Verstellen des Anschlagelements 62 ist das Einlegen der Gangstufe 2, das Schaltelement 51b ist in der Neutralposition. In dieser Ausgangssituation befindet sich die schaltbare Koppelvorrichtung 200 (Klauenkupplung) in der Neutralposition (Zahn auf Lücke).

Eine Verlagerung des Anschlagelements 62 in die Aktivierungsposition führt zu einer Verstellung der schaltbaren Koppelvorrichtung 200 in die Koppelposition (Zahn auf Zahn Stellung). Dies ist in der Figur 7a mit der Position 1 gezeigt.

Durch diese Verstellung in die Zahn auf Zahn Stellung wird das erste Kupplungsteil 201a ausgehend von der Zahn auf Lücke Stellung über das an das zweite Schaltelement 51b angebundene zweite Kupplungsteil 201b axial nach links in den verbreiteten Abschnitt/optionalen Pfad 59 verschoben. Diese Verschiebung ist in der Position 2 der Figur 7a gezeigt und in der Figur 7b durch die schrägen Pfeile dargestellt. Die Schaltelemente befinden sich dann in der durch die schwarz hinterlegten Nutensteine eingezeichneten Position (Figur 7a 3. Position). Schaltelement 51a in einer neutralen Position, Schaltelement 51b in der Gangposition 4. Dies ist bei dem dargestellten Ausführungsbeispiel bei ca. 120 Grad.

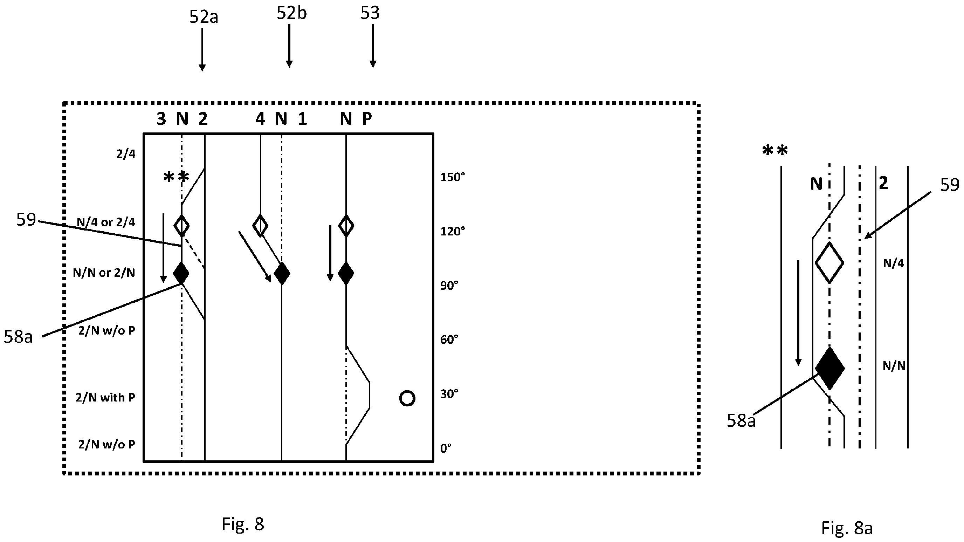

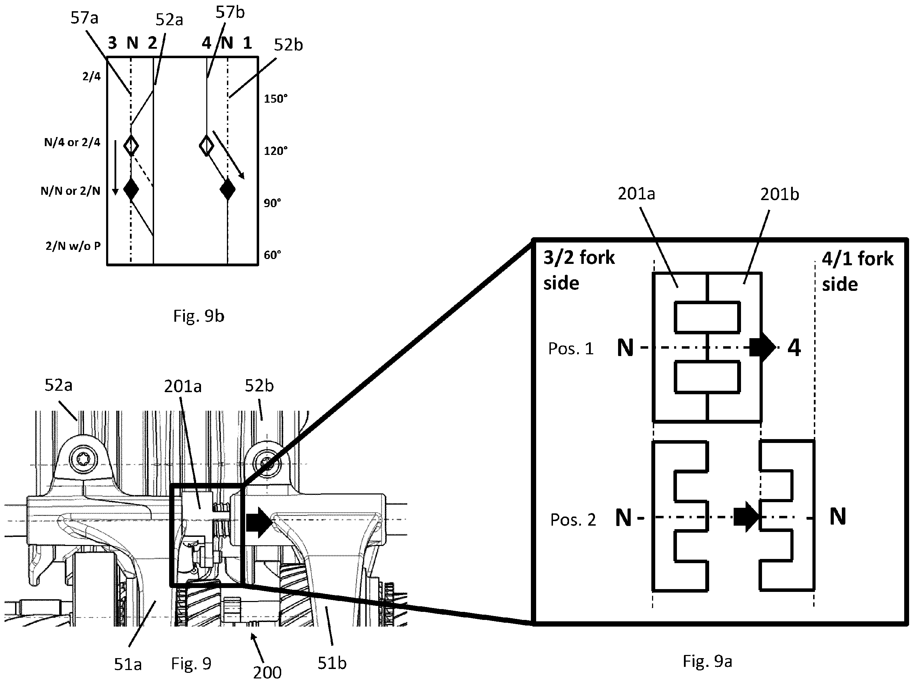

Das weitere Schalten ist in den Figuren 8 und 8a dargestellt, wobei ausgehend von der Drehstellung der Schaltwalze von 120 Grad, die Schaltwalzenkörper 34 zurückgedreht wird um etwa 30 Grad. Wie es aus der Figur 8 zu ersehen ist, wird bei einem zurückdrehen des Schaltwalzenkörpers das zweite Schaltelement 51b von der Gangposition 4 in die neutrale Stellung durch axiales Verlagern verbracht. Das erste Schaltelement 51a verbleibt bei der Verdrehung von 120 Grad zu 90 Grad in dem optionalen Pfad 59, der ebenfalls der neutralen Position entspricht. In der Figur 9a bei Position 2 ist die Situation der geschalteten neuralen Position, in der keine Gänge geschaltet sind, schematisch durch die Stellung der Kupplungsteile gezeigt.

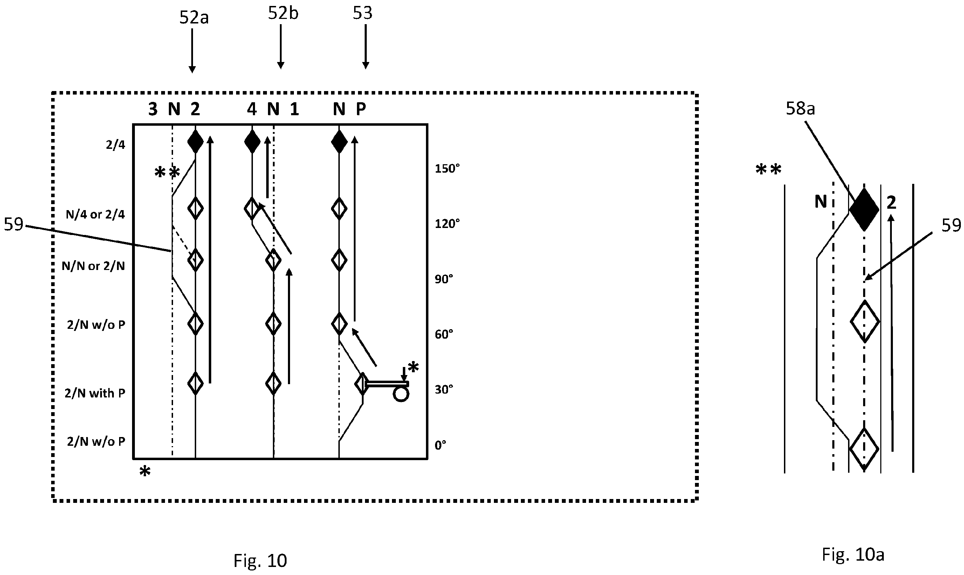

Die Figuren 10, 10a, 11, 11a, 11b zeigen einen Schaltvorgang der ausgehend von der eingelegten Gangstufe 2 bei ca. 120 Grad in die Gangstufe 4 schaltet, wobei keine axiale Verlagerung des ersten Schaltelementes 51a in den optionalen Pfad 58 erfolgt. Soweit die Klauenkupplung 200 nicht über das Anschlagelement 62 und die Koppelstange 69 nicht in die Koppelposition verstellt wird, verbleibt die Schaltbare Koppelvorrichtung 200 in der Neutralposition, die in der Figur 11a schematisch dargestellt ist. Bei einer axialen Verlagerung des zweiten Schaltelements 51b von der Neutrallinie nach links in die Gangposition 4 verschiebt sich das zweite Kupplungsteil 201b formschlüssig in das erste Kupplungsteil 201a. Durch den formschlüssigen Eingriff wird keine axiale Verlagerung des ersten Schaltelements 51a in den optionalen Pfad erreicht. Das Schaltelement 51a verbleibt in der Gangposition 2.

In die weitere Schaltwalzennut 53 greift das dritte Schaltelement 55 ein, das zwischen einer Neutralposition und einer Parkposition verstellbar ist. Die als weitere Schaltwalzennut 53 ausgeführte Schaltkontur umfasst einen ersten Schaltabschnitt S1, der einem Referenzwinkel zugeordnet ist, der in dem Ausführungsbeispiel 30 Grad beträgt. Wie man es aus der Detaildarstellung der Figur 6 erkennen kann, wird die Parkposition sowie die Referenzwinkelposition bei 30 Grad erreicht. Dies ist mit der Darstellung des Nutensteins 58c des dritten Schaltelements 55 angezeigt. Wie es weiterhin aus der Skizze zu erkennen ist, beginnt ein axiales Verlagern des dritten Schaltelements 55 bei in etwa 0 Grad. Bei 30 Grad ist die axiale Verlagerung in der Parkposition beendet. Ausgehend von der Parkposition wird dann die axiale Verlagerung des Schaltelements 55 in Richtung auf die Neutralposition zurück bis in etwa 60 Grad bewirkt.

In der gezeigten Ausführung des Schaltwalzenkörpers 34, in der Parkposition bei 30 Grad befindet sich die Schaltelement 51a in eine nach rechts verlagerter Position, so dass die Gangstufe 2 eingelegt ist.

### Bezugszeichenliste

- 10: Antriebsstrang
- 12: Antriebsmotor
- 14: Kupplungsanordnung
- 16: Getriebeeinheit
- 17: Eingangswelle
- 18: Differential
- 20: Angetriebene Räder
- 20L: angetriebene Räder
- 20R: angetriebene Räder
- 24: Schaltkupplungsanordnung
- 26: Schaltmuffe
- 30: Schaltvorrichtung
- 32: Schaltwalzenanordnung
- 34: Schaltwalzenkörper
- 36: Drehachse
- 37a,b: Drehrichtung
- 38: Gehäuse
- 39: Schaltwalzenachsenaufnahme
- 40: Schaltwalzenachse
- 42: Schaltwalzenlageranordnung
- 44: Antriebsglied
- 46: Verzahnung
- 48: Antriebsritzel
- 50: Schaltwalzenmotor
- 51: Schaltstange
- 51a: erstes Schaltelement
- 51b: zweites Schaltelement
- 52a: erste Schaltkontur
- 52b: zweite Schaltkontur
- 53: weitere Schaltwalzennut
- 55: drittes Schaltelement
- 55a: erster Endbereich
- 55b: zweiter Endbereich
- 56: Nut
- 57a: Neutrallinie
- 57b: Neutrallinie
- 58a, b, c: Nutenstein
- 59: optionaler Pfad
- 60: Anschlageinrichtung
- 62: Anschlagelement
- 64: Referenzelement
- 65: erster Endbereich
- 66: zweiter Endbereich
- 68: Hebel
- 69: Koppelstange
- 69a: erster Endbereich
- 69b: zweiter Endbereich
- 70: Lagerachse
- 71: Pfeil
- 90: Aktuator
- 91: Koppelelement
- 92: Pfeil
- 200: schaltbare Koppelvorrichtung
- 201: Kupplung
- 201a: erstes Kupplungsteil
- 201b: zweites Kupplungsteil
- 202a: Zähne
- 202b: Zähne
- 203a: Ausnehmungen
- 203b: Ausnehmungen
- A: Achse
- N: Neutrallinie
- P1: Position
- P2: Position
- P3: Position
- S1: Schaltabschnitt

## Patentansprüche

1. Schaltwalzenanordnung (32) für eine Schaltvorrichtung (30) einer Getriebeeinheit (16), insbesondere für Kraftfahrzeuge,
mit einem Schaltwalzenkörper (34), der um eine Schaltwalzenachse (40) drehbar ist,
mit einem ersten Schaltelement (51a),
mit einem zweiten Schaltelement (51b),
wobei an dem Schaltwalzenkörper (34) eine erste und mindestens eine zweite Schaltkontur (52a, 52b) ausgebildet ist, die sich über 360 Grad des Umfangsabschnitt des Schaltwalzenkörpers (34) erstrecken,
wobei die erste und zweite Schaltkontur (52a, 52b) in einer axialen und/oder radialen Richtung ausgebildet sind,
wobei in die erste Schaltkontur (52a) das erste Schaltelement (51a) eingreift und
die zweite Schaltkontur (52b) das zweite Schaltelement (51b) derart eingreifen, dass diese durch Drehen des Schaltwalzenkörpers (34) mittels der korrespondierenden Schaltkontur in axialer Richtung des Schaltwalzenkörpers (34) verschoben werden,
**dadurch gekennzeichnet,**
**dass** die Schaltwalzenanordnung (32) eine schaltbare Koppelvorrichtung (200) aufweist,
**dass** die erste Schaltkontur (52a) einen optionalen Pfad (59) aufweist, und dass der optionale Pfad (59) eine Form einer axial lokal verbreiteten ersten Schaltkontur (52a) in dem Schaltwalzenkörper (34) aufweist,
**dass** das erste und das zweite Schaltelement (51a, 51b) über die schaltbare Koppelvorrichtung (200) derart koppelbar sind, dass eine axiale Verschiebung des zweiten Schaltelements (51b) auf das erste Schaltelement (51a) zwecks Schalten in eine neutrale Gangposition, die dem optionalen Pfad (59) zugeordnet ist, bewirkt wird, wobei die axiale Verbreiterung des optionalen Pfads (59) sich über einen Winkelbereich erstreckt, wobei in diesem Winkelbereich das erste Schaltelement (51a) zwischen einer Gangstufe und einer Neutralstellung im optionalen Pfad (59) geschaltet wird und das zweite Schaltelement (51b) zwischen einer Gangstufe und einer Neutralstellung geschaltet wird.

2. Schaltwalzenanordnung (32) nach Anspruch 1, **dadurch gekennzeichnet,**
**dass** die erste Schaltkontur (52a) und die zweite Schaltkontur (52b) in dem Winkelbereich des optionalen Pfads (59) derart ausgebildet sind, dass das erste und das zweite Schaltelement (51a, 51b) ihren geringsten Abstand zueinander haben.

3. Schaltwalzenanordnung (32) nach einem der vorangehenden Ansprüche, **dadurch gekennzeichnet,**
**dass** die Schaltwalzenanordnung (32) eine Schaltstange (51) aufweist, und
**dass** das erste und zweite Schaltelement (51a, 51b) auf der Schaltstange (51) geführt werden und
ein Schalten der Koppelvorrichtung (200) in der Winkelposition des Schaltwalzenkörpers (34) erfolgt, in der die Schaltelemente (51a, 51b) den geringsten axialen Abstand zueinander aufweisen.

4. Schaltwalzenanordnung (32) nach einem der vorangehenden Ansprüche, **dadurch gekennzeichnet,**
**dass** die Koppelvorrichtung (200) eine schaltbare Kupplung (201) mit einem ersten Kupplungsteil (201a) und einem zweiten Kupplungsteil (201b) umfasst,
wobei das erste Kupplungsteil (201a) mit dem ersten Schaltelement (51a) und
das zweite Kupplungsteil (201b) mit dem zweiten Schaltelement (51b) verbunden ist.

5. Schaltwalzenanordnung (32) nach Anspruch 4, **dadurch gekennzeichnet,**
**dass** die schaltbare Kupplung (201) eine Klauenkupplung ist, und
das erste Kupplungsteil (201a) und das zweite Kupplungsteil (201b) mit entsprechenden Zähnen (202a, 202b) ausgeführt sind.

6. Schaltwalzenanordnung (32) nach Anspruch 5, **dadurch gekennzeichnet, dass** die schaltbare Kupplung (201) derart ausgeführt ist, dass die Kupplung in die nachfolgenden Positionen schaltbar ist:
a) Neutralposition - geschaltet, wobei die Zähne (202a) des ersten Kupplungsteils (201a) in Ausnehmungen (203b), die zwischen den Zähnen (202b) des zweiten Kupplungsteils ausgebildet sind formschlüssig eingreifen, und
wobei gleichzeitig die Zähne (202b) des zweiten Kupplungsteils (201b) in Ausnehmungen (203a), die zwischen den Zähnen (202a) des ersten Kupplungsteils (201a) ausgebildet sind formschlüssig eingreifen,
b) Neutralposition - geöffnet, entspricht einer geschalteten Neutralposition, wobei die formschlüssige Verbindung durch eine axiale Verlagerung der Kupplungsteile (201a/201b) aufgehoben ist, und die korrespondierenden Zähne nicht in die korrespondierenden Ausnehmungen eingreifen,
c) Koppelposition,
wobei die Zähne (202a) des ersten Kupplungsteils (201a) mittels ihrer Stirnseiten an den Stirnseiten der Zähne (202b) des zweiten Kupplungsteils (201b) anliegen.

7. Getriebeeinheit (16) für einen Antriebsstrang (10) eines Kraftfahrzeugs,
mit einer Schaltvorrichtung zum Schalten von Gangstufen,
wobei die Schaltvorrichtung eine Schaltwalzenanordnung (32) nach einem der Ansprüche 1 - 6 aufweist.

8. Verfahren zum Durchführen eines Schaltvorgangs in eine neutrale Stellung mit einer Getriebeeinheit (16) nach Anspruch 7, die eine Schaltwalzenanordnung nach Anspruch 6 aufweist, mit folgenden Verfahrensschritten
a) Verdrehen des Schaltwalzenkörpers (34) in eine Position in der die beiden Schaltelemente (51a, 51b) den geringsten axialen Abstand zueinander aufweisen,
wobei in dieser Position mittels des ersten Schaltelements (51a) eine Gangstufe eingelegt ist und
wobei sich das zweite Schaltelement (51b) in der Neutralposition befindet,
b) Betätigen der schaltbaren Kupplung (201) und Verstellen in die Koppelposition,
c) Weiterdrehen des Schaltwalzenkörpers (34) und
axiales Verschieben des ersten Schaltelementes (51a) in eine Neutralposition in den optionalen Pfad (59) durch ein axiales Verschieben des zweiten Schaltelementes (51b) in eine Position in der mittels des zweiten Schaltelements (51b) eine Gangstufe eingelegt ist.
d) Zurückverdrehen des Schaltwalzenkörpers (34) um einen Winkel derart,
dass das erste Schaltelement (51a) in dem optionalen Pfad (59) verbleibt und
das zweite Schaltelement (51b) in eine Position verbracht wird, in der das zweite Schaltelement (51b) in einer Neutralposition ist.

## Claims

1. Gear shift drum assembly (32) for a shift device (30) of a transmission unit (16), in particular for motor vehicles,
with a gear shift drum body (34) which is rotatable about a gear shift drum axis (40),
with a first shift element (51a),
with a second shift element (51b),
wherein a first and at least a second shift contour (52a, 52b) are formed on the gear shift drum body (34) and extend over 360 degrees of the circumferential portion of the gear shift drum body (34),
wherein the first and second shift contour (52a, 52b) are formed in an axial and/or radial direction,
wherein the first shift element (51a) engages with the first shift contour (52a) and
the second shift element (51b) engages with the second shift contour (52b) in such a way that these are displaced by means of the corresponding shift contour in the axial direction of the gear shift drum body (34) by rotation of the gear shift drum body (34),
**characterized**
**in that** the gear shift drum assembly (32) has a shiftable coupling device (200),
**in that** the first shift contour (52a) has an optional path (59), and in that the optional path (59) has a form of an axially locally widened first shift contour (52a) in the gear shift drum body (34),
**in that** the first and the second shift element (51a, 51b) can be coupled by way of the shiftable coupling device (200) in such a way that an axial displacement of the second shift element (51b) onto the first shift element (51a) is effected for the purpose of shifting to a neutral gear position, which is assigned to the optional path (59), wherein the axial widening of the optional path (59) extends over an angular range, wherein, in this angular range, the first shift element (51a) is shifted between a gear stage and a neutral position in the optional path (59) and the second shift element (51b) is shifted between a gear stage and a neutral position.

2. Gear shift drum assembly (32) according to Claim 1, **characterized**
**in that** the first shift contour (52a) and the second shift contour (52b) are formed in the angular range of the optional path (59) in such a way that the first and the second shift element (51a, 51b) have their lowest spacing to one another.

3. Gear shift drum assembly (32) according to either of the preceding claims, **characterized**
**in that** the gear shift drum assembly (32) has a shift rod (51), and
**in that** the first and second shift element (51a, 51b) are guided on the shift rod (51) and
shifting of the coupling device (200) is effected in that angular position of the gear shift drum body (34) in which the shift elements (51a, 51b) have the smallest axial spacing to one another.

4. Gear shift drum assembly (32) according to one of the preceding claims, **characterized**
**in that** the coupling device (200) comprises a shiftable clutch (201) with a first clutch part (201a) and a second clutch part (201b),
wherein the first clutch part (201a) is connected to the first shift element (51a) and
the second clutch part (201b) is connected to the second shift element (51b).

5. Gear shift drum assembly (32) according to Claim 4, **characterized**
**in that** the shiftable clutch (201) is a dog clutch, and
the first clutch part (201a) and the second clutch part (201b) are embodied with corresponding teeth (202a, 202b).

6. Gear shift drum assembly (32) according to Claim 5, **characterized**
**in that** the shiftable clutch (201) is embodied in such a way that the clutch can be shifted to the following positions:
a) neutral position - shifted, wherein the teeth (202a) of the first clutch part (201a) form-fittingly engage with apertures (203b) formed between the teeth (202b) of the second clutch part, and wherein at the same time the teeth (202b) of the second clutch part (201b) form-fittingly engage with apertures (203a) formed between the teeth (202a) of the first clutch part (201a),
b) neutral position - open, corresponds to a shifted neutral position, wherein the form-fitting connection is cancelled by an axial displacement of the clutch parts (201a/201b), and the corresponding teeth do not engage with the corresponding apertures,
c) coupling position,
wherein the teeth (202a) of the first clutch part (201a) bear by means of their end sides against the end sides of the teeth (202b) of the second clutch part (201b).

7. Transmission unit (16) for a drivetrain (10) of a motor vehicle,
with a shift device for shifting gear stages,
wherein the shift device has a gear shift drum assembly (32) according to one of Claims 1-6.

8. Method for carrying out a shift operation to a neutral position with a transmission unit (16) according to Claim 7, which has a gear shift drum assembly according to Claim 6, having the following method steps:
a) rotating the gear shift drum body (34) to a position in which the two shift elements (51a, 51b) have the smallest axial spacing to one another,
wherein, in this position, a gear stage is engaged by means of the first shift element (51a) and wherein the second shift element (51b) is in the neutral position,
b) actuating the shiftable clutch (201) and adjusting to the coupling position,
c) rotating the gear shift drum body (34) further and axially displacing the first shift element (51a) to a neutral position in the optional path (59) by an axial displacement of the second shift element (51b) to a position in which a gear stage is engaged by means of the second shift element (51b),
d) rotating the gear shift drum body (34) back by an angle in such a way that the first shift element (51a) remains in the optional path (59) and
the second shift element (51b) is brought to a position in which the second shift element (51b) is in a neutral position.

## Revendications

1. Ensemble tambour de changement de vitesse (32) pour un dispositif de changement de vitesse (30) d'une unité de transmission (16), notamment pour des véhicules automobiles, avec un corps de tambour de changement de vitesse (34), qui peut tourner autour d'un axe de tambour de changement de vitesse (40),
avec un premier élément de changement de vitesse (51a),
avec un deuxième élément de changement de vitesse (51b),
un premier et au moins un deuxième contour de changement de vitesse (52a, 52b) étant réalisés sur le corps de tambour de changement de vitesse (34), lesquels s'étendent sur 360 degrés de la section périphérique du corps de tambour de changement de vitesse (34), le premier et le deuxième contour de changement de vitesse (52a, 52b) étant réalisés dans une direction axiale et/ou radiale,
le premier contour de changement de vitesse (52a) engageant le premier élément de changement de vitesse (51a) et
le deuxième contour de changement de vitesse (52b) engageant le deuxième élément de changement de vitesse (51b) de telle sorte que ceux-ci sont décalés dans la direction axiale du corps de tambour de changement de vitesse (34) par rotation du corps de tambour de changement de vitesse (34) au moyen du contour de changement de vitesse correspondant, **caractérisé**
**en ce que** l'ensemble tambour de changement de vitesse (32) présente un dispositif de couplage commutable (200),
**en ce que** le premier contour de changement de vitesse (52a) présente un chemin optionnel (59), et en ce que le chemin optionnel (59) présente une forme d'un premier contour de changement de vitesse (52a) élargi localement de manière axiale dans le corps de tambour de changement de vitesse (34),
**en ce que** le premier et le deuxième élément de changement de vitesse (51a, 51b) peuvent être couplés par l'intermédiaire du dispositif de couplage commutable (200) de manière à provoquer un décalage axial du deuxième élément de changement de vitesse (51b) vers le premier élément de changement de vitesse (51a) afin de passer à une position de vitesse neutre associée au chemin optionnel (59), l'élargissement axial du chemin optionnel (59) s'étendant sur une plage angulaire, plage angulaire dans laquelle le premier élément de changement de vitesse (51a) est commuté entre un rapport de vitesse et une position neutre dans le chemin optionnel (59) et le deuxième élément de changement de vitesse (51b) est commuté entre un rapport de vitesse et une position neutre.

2. Ensemble tambour de changement de vitesse (32) selon la revendication 1, **caractérisé en ce que** le premier contour de changement de vitesse (52a) et le deuxième contour de changement de vitesse (52b) sont réalisés dans la plage angulaire du chemin optionnel (59) de telle sorte que le premier et le deuxième élément de changement de vitesse (51a, 51b) sont à leur distance la plus courte l'un de l'autre.

3. Ensemble tambour de changement de vitesse (32) selon l'une quelconque des revendications précédentes, **caractérisé**
**en ce que** l'ensemble tambour de changement de vitesse (32) présente une tige de changement de vitesse (51), et
**en ce que** le premier et le deuxième élément de changement de vitesse (51a, 51b) sont guidés sur la tige de changement de vitesse (51), et
une changement de vitesse du dispositif de couplage (200) a lieu dans la position angulaire du corps de tambour de changement de vitesse (34) dans laquelle les éléments de changement de vitesse (51a, 51b) présentent la distance axiale la plus faible entre eux.

4. Ensemble tambour de changement de vitesse (32) selon l'une quelconque des revendications précédentes, **caractérisé**
**en ce que** le dispositif de couplage (200) comprend un embrayage commutable (201) avec une première partie d'embrayage (201a) et une deuxième partie d'embrayage (201b),
la première partie d'embrayage (201a) étant reliée au premier élément de changement de vitesse (51a) et
la deuxième partie d'embrayage (201b) étant reliée au deuxième élément de changement de vitesse (51b).

5. Ensemble tambour de changement de vitesse (32) selon la revendication 4, **caractérisé en ce que** l'embrayage commutable (201) est un embrayage à griffes, et
la première partie d'embrayage (201a) et la deuxième partie d'embrayage (201b) sont conçues avec des dents correspondantes (202a, 202b).

6. Ensemble tambour de changement de vitesse (32) selon la revendication 5, **caractérisé en ce que** l'embrayage commutable (201) est conçu de telle sorte que l'embrayage peut être commuté dans les positions suivantes :
a) position neutre - commutée, les dents (202a) de la première partie d'embrayage (201a) s'engageant par complémentarité de forme dans des évidements (203b) réalisés entre les dents (202b) de la deuxième partie d'embrayage, et
simultanément les dents (202b) de la deuxième partie d'embrayage (201b) s'engageant par complémentarité de forme dans des évidements (203a) réalisés entre les dents (202a) de la première partie d'embrayage (201a),
b) position neutre - ouverte, correspondant à une position neutre commutée,
la liaison par complémentarité de forme étant supprimée par un déplacement axial des parties d'embrayage (201a/201b), et les dents correspondantes ne s'engageant pas dans les évidements correspondants,
c) position de couplage,
les dents (202a) de la première partie d'embrayage (201a) étant en contact, par leurs côtés frontaux, avec les côtés frontaux des dents (202b) de la deuxième partie d'embrayage (201b).

7. Unité de transmission (16) pour une chaîne cinématique (10) d'un véhicule automobile, avec un dispositif de changement de vitesse pour commuter les rapports de vitesse,
le dispositif de changement de vitesse présentant un ensemble tambour de changement de vitesse (32) selon l'une quelconque des revendications 1 à 6.

8. Procédé pour effectuer une opération de changement de vitesse dans une position neutre avec une unité de transmission (16) selon la revendication 7, qui présente un ensemble tambour de changement de vitesse selon la revendication 6, avec les étapes de procédé suivantes :
a) la rotation du corps de tambour de changement de vitesse (34) dans une position dans laquelle les deux éléments de changement de vitesse (51a, 51b) présentent la distance axiale la plus faible entre eux,
un rapport de vitesse étant engagé dans cette position au moyen du premier élément de changement de vitesse (51a) et
le deuxième élément de changement de vitesse (51b) se trouvant dans la position neutre,
b) l'actionnement de l'embrayage commutable (201) et le réglage dans la position de couplage,
c) la poursuite de la rotation du corps de tambour de changement de vitesse (34) et le décalage axial du premier élément de changement de vitesse (51a) dans une position neutre dans le chemin optionnel (59) par un décalage axial du deuxième élément de changement de vitesse (51b) dans une position dans laquelle un rapport de vitesse est engagé au moyen du deuxième élément de changement de vitesse (51b),
d) la rotation du corps de tambour de changement de vitesse (34) en arrière d'un angle tel que le premier élément de changement de vitesse (51a) reste dans le chemin optionnel (59) et que le deuxième élément de changement de vitesse (51b) est amené dans une position dans laquelle le deuxième élément de changement de vitesse (51b) est dans une position neutre.
